# EUROPEAN PATENT APPLICATION

(11) **EP 4 663 440 A1**
(43) Date of publication of application: **17.12.2025**
(21) Application number: 24220611.8
(22) Date of filing: 17.12.2024
(51) Int. Cl.: B60J 1/17, B60J 10/79

(54) **MATING STRUCTURE FOR FLUSH VEHICLE WINDOW LIFT SYSTEM AND FLUSH DOOR SYSTEM**

(30) Priority: 13.06.2024 CN 202410763759
(71) Applicant: Zhejiang Xiantong Rubber & Plastic Co., LTD., Taizhou City Zhejiang 318000 (CN)
(72) Inventor: SHI, Zequn, Taizhou City, 318000 (CN); PAN, Chenhui, Taizhou City, 318000 (CN); BAO, Weiping, Taizhou City, 318000 (CN); XIANG, Junchuan, Taizhou City, 318000 (CN); YING, Guanghui, Taizhou City, 318000 (CN); PAN, Haiming, Taizhou City, 318000 (CN); YING, Zhijian, Taizhou City, 318000 (CN); WANG, Changjie, Taizhou City, 318000 (CN)
(74) Representative: Valet Patent Services Limited

(57) **Abstract**

A mating structure including a glass guide groove (2) secured a door guide rail (12); door glass (3), wherein a glass guide rail (4) is secured to one side, close to the door guide rail (12), of the door glass (3), wherein the glass guide rail (4) is fitted in the glass guide groove (2), the glass guide groove (2) limits front-rear movement and inner-outer shaking of the glass guide rail, and the glass guide groove (2) is configured to guide the glass guide rail (4) and the door glass (3) to lift; a door panel (13), secured to an outer side wall of the door (1) and coplanar with the door glass (3); and a plurality of sets of sealing lips (5) in dynamic sealing connection to the door glass (3) and the glass guide rail (4).

## Description

### TECHNICAL FIELD

The present disclosure relates to the technical field of doors, and in particular, relates to a mating structure for a flush vehicle lift system and a flush door system.

### BACKGROUND ART

As the automotive industry continues to develop, market demands for vehicle design are steadily increasing, with growing attention to the overall side profile and aerodynamic performance. Currently, doors are primarily classified into two main categories based on structure: framed doors and frameless doors. Traditional framed doors offer good sealing performance; however, the step difference between the door glass and the door itself results in higher aerodynamic drag, which contributes to wind noise and detracts from aesthetics. In contrast, the introduction of frameless doors has improved overall appearance, but due to the lack of rigid support for the door glass above the waistline, sealing performance is compromised.

Based on the advantages and disadvantages of both door structures, many manufacturers have begun seeking to develop a door structure that balances aesthetics with effective sealing performance. Against this backdrop, a flush framed door has emerged.

However, the conventional flush doors still face the following technical challenges:
Regarding guiding precision, the flush door requires precise alignment between the glass and the door. Otherwise, issues with the guiding accuracy of the glass may arise, affecting the proper opening and closing of the door.

As for dustproof, the glass of the flush door is on the same plane with the vehicle door, and a traditional dustproof structure cannot be used, such that effective dustproof measures are required to be taken to prevent impurities such as dust from entering the vehicle door structure. In the flush door, the glass and the door are flush on the same plane, which makes traditional dust-proof structures unusable. Therefore, effective dust-proof measures need to be implemented to prevent dust and other impurities from entering the door structure.

As for strength, the glass rail in the flush door is subjected to greater forces compared to traditional vehicle doors. As a result, the strength of the glass needs be enhanced to prevent cracking or damage.

As for tightness, sealing performance is a critical issue for the flush door. The absence of the traditional first sealing lip reduces the sealing performance, necessitating effective sealing measures to ensure good sealing performance and prevent wind and rain from entering the vehicle.

As for assembly, assembly of the flush door is also a technical challenge. The increased mating surfaces between the glass and the glass guide groove, as well as between the glass guide groove and the door rail, make it difficult to assemble the door guide groove. Effective assembly measures need to be implemented to ensure that the glass is properly installed in the door while maintaining normal door operation.

Therefore, how to provide a mating structure of a flush vehicle lift system and a flush door system, which have good sealing performance, are free from water ingress and allows for normal lifting of the glass is a problem which needs to be solved by a person skilled in the art.

### SUMMARY

In view of the above, the present disclosure provides a mating structure for a flush vehicle lift system and a flush door system, which solve the problems of difficult glass lifting, poor sealing performance and easy water ingress of the flush door structure in the prior art.

The mating structure for the flush vehicle lift system, which is applicable to being mounted on a door, includes:
a glass guide groove, wherein the glass guide groove is a bent structure and is secured to the door and a door guide rail;
vehicle door glass, wherein a glass guide rail is secured to one side, close to the door guide rail, of the door glass, wherein the glass guide rail is fitted and slidably connected in the glass guide groove, the glass guide groove is configured to limit front-rear movement and inner-outer shaking of the glass guide rail, and the glass guide groove is configured to guide the glass guide rail and the door glass to lift;
a door panel, wherein the door panel is secured to an outer side wall of the door and is coplanar with the door glass; and
a plurality of sets of sealing lips, wherein the sealing lips respectively correspond to a length direction of the glass guide groove, and the sealing lips are integrally connected to the glass guide groove and are in dynamic sealing connection to the door glass and the glass guide rail.

This technical solution achieves the following beneficial effects: The glass guide rail is arranged on one side, close to the door guide rail, of the door glass, and the door is provided with the glass guide groove which is capable of sliding up or down in the glass guide groove. Due to the embedded connection relation between the glass guide groove and the glass guide rail, the glass guide rail is convenient to assemble while the guide precision is improved. A plurality of sets of sealing lips are arranged in the length direction of the corresponding glass guide groove, and the sealing lips are in dynamic sealing engagement with the glass guide rail and the door glass, such that a gap seal between the door glass and the door is achieved, water fails to enter the vehicle through the door glass, and a good noise reduction effect is achieved. In addition, there is no step between the door glass and the door panel, and wind resistance and wind noise are reduced.

In some embodiments, the glass guide groove is a U-shaped structure, and two side ends of the glass guide groove corresponding to the U-shaped structure are bent in a same direction and form a misalignment opening, wherein a first sealing lip and a second sealing lip are fixedly connected to the two side ends of the glass guide groove respectively, wherein the first sealing lip is in dynamic sealing connection to an inner wall surface of the door glass, and the second sealing lip is in dynamic sealing connection to a side end of the door glass.

In this way, the glass guide groove is a special U-shaped structure, which is intended to wrap the outer side of the glass guide rail, and well limit the front-rear movement and the inner-outer shaking of the glass guide rail, such that the lifting of the door glass is stable, and the gap between the glass guide groove and the door glass is sealed using the first sealing lip and the second sealing lip.

In some embodiments, an end face of a notch in one side of the glass guide groove is aligned with the door glass and the door panel on a same plane..

In this way, the door glass and the door panel are positioned on the same plane, such that wind resistance is reduced, and meanwhile, the quietness inside the vehicle is improved.

In some embodiments, the glass guide rail includes a gluing groove portion and a fork frame portion, wherein the gluing groove portion is secured to one side, close to the door guide rail, of the door glass by an adhesive, and the fork frame portion is positioned in the glass guide groove, the fork frame portion is a Y-shaped structure, wherein two limiting protrusions are respectively arranged at each of two side ends of the fork frame portion, and are in contact with an inner side wall of the glass guide groove and are configured to limit front-rear movement of the glass guide rail in an X direction and inner-outer shaking in a Y direction.

In this way, the fork frame portion is a Y-shaped structure, such that the front-rear movement and the inner-outer shaking of the glass guide rail in the glass guide groove are limited by virtue of the structural characteristics of the fork frame portion, the X direction is a front-rear direction of the vehicle body, and the Y direction is an inner-outer direction of the vehicle body.

In some embodiments, a third sealing lip is fixedly connected to a bottom of the glass guide groove, wherein the third sealing lip is in dynamic sealing connection to the fork frame portion; and a fourth sealing lip is arranged on a bending portion, close to an end portion of the other side, of the glass guide groove, wherein the fourth sealing lip is in dynamic sealing connection to the glass guide rail, and the glass guide groove and the first sealing lip, the second sealing lip, the third sealing lip and the fourth sealing lip on the glass guide groove cooperate to establish a sealing and isolative environment between the door glass and the door.

In this way, the third sealing lip and the fourth sealing lip play a role in buffering and can seal a gap between the glass guide rail and the glass guide groove.

In some embodiments, a wear-resistant layer corresponding to the limiting protrusion is arranged on the inner side wall of the glass guide groove, a wear-resistant layer corresponding to an abutment position of the door glass is arranged on an outer side wall of each of the first sealing lip and the second sealing lip, and a wear-resistant layer corresponding to an abutment position of the glass guide rail is arranged on an outer side wall of each of the third sealing lip and the fourth sealing lip.

In this way, the wear-resistant layer reduces the damage of the glass guide rail to the glass guide groove, reduces the loss of the sealing lip edge, and prolongs the service life of the parts of the vehicle.

The present disclosure also provides a flush door system. The system includes a mating structure for a flush vehicle lift system and a door body, wherein the door body is provided with a door guide rail for fixing a glass guide groove and a reinforcement plate configured to reinforce a structural strength of the door, the vehicle door guide rail is secured to and wrapped on an outer side of the glass guide groove after being bent and molded by an alloy plate, the reinforcement plate is fixedly provided with a door panel, the door panel is fixedly connected to one end of the glass guide groove, and the vehicle door glass, the door panel and the end of the glass guide groove are positioned on the same plane.

This technical solution achieves the following beneficial effects: The flush door system ensures that the outer surface of the door glass is coplanar with the outer surface of the door panel, namely, flush exists between the door glass and the outer side of the door body, and when the door window is seen from the appearance of the door, the outer surface of the door glass and the outer surface of the door are positioned on the same surface, such that wind resistance is reduced, and the quietness inside the vehicle is improved.

In some embodiments, the door panel is any one of a glass panel, the sealing lip is molded from an EPDM material, and the wear-resistant layer is molded from a hard rubber or a PER material.

In this way, the sealing lip is elastic, which is adaptively in sealing and abutment connection to the door glass and the glass guide rail, such that air ingress or water ingress is prevented at a joint or a gap therebetween.

### BRIEF DESCRIPTION OF DRAWINGS

FIG. 1 is a first schematic diagram of a mating structure for a flush vehicle lift system according to some embodiments of the present disclosure ;
FIG. 2 is a second schematic diagram of the mating structure for the flush vehicle lift system according to some embodiments of the present disclosure ; and
FIG. 3 is a third schematic diagram of the mating structure for the flush vehicle lift system according to some embodiments of the present disclosure.

Reference numerals and denotations thereof: 1-vehicle door; 11-reinforcement plate; 12-vehicle door guide rail; 13-door panel; 14-inboard panel beating; 2-glass guide way; 21-articulates the hook; 3-door glass; 4-glass guide rail; 41-gluing groove portion; 42-fork frame portion; 43-spacing arch; 5-sealing lip; 51-first sealing lip; 52-second sealing lip, 53-third sealing lip, 54-fourth sealing lip; 6-wear-resistant layer.

### DETAILED DESCRIPTION

The following description of the embodiments of the present disclosure will be made clearly and completely with reference to the accompanying drawings, in which it is apparent that the embodiments described are only some embodiments of the present disclosure, but not all embodiments. All other embodiments, which can be made by those skilled in the art based on the embodiments of the present disclosure without making any inventive effort, are intended to be embodied within the scope of the present disclosure.

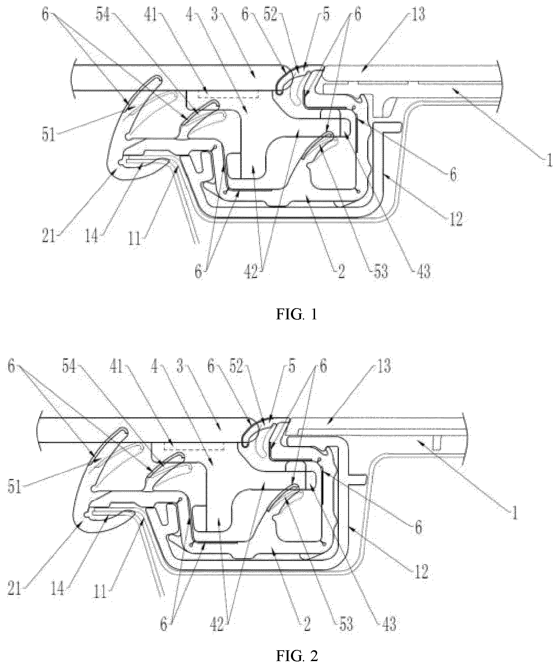

Referring to FIGS. 1 to 3, a mating structure for a flush vehicle lift system according to some embodiments of the present disclosure is mounted on a door 1. The mating structure includes: a glass guide groove 2, door glass 3, a door panel 13, and a plurality of sets of sealing lips 5.

The glass guide groove 2 is a bent structure and is secured to the door 1 and a door guide rail 12. The door guide rail 12 is secured to an outer side of the glass guide groove 2, and the door guide rail 12 is fixedly connected to the door 1.

A glass guide rail 4 is secured to one side, close to the door guide rail 12, of the door glass 3. The glass guide rail 4 is fitted and slidably connected in the glass guide groove 2. The glass guide rail and the glass guide groove are all one-piece members. The glass guide groove 2 limits front-rear movement and inner-outer shaking of the glass guide rail 4, and the glass guide groove 2 is configured to guide the glass guide rail 4 and the door glass 3 to lift.

The door panel 13 is secured to an outer side wall of the door 1 and is coplanar with the door glass 3.

Four sets of sealing lips 5 are arranged corresponding to a length direction of the glass guide groove 2, and it is understood that a single sealing lip is contiguous along the length direction of the glass guide groove, and the sealing lips 5 are integrally formed with the glass guide groove 2 and are configured to be in dynamic sealing connection to the door glass 3 and the glass guide rail 4. The sealing lip is flexible, which is capable of sealing the gap between the door glass and the door, avoiding air ingress and water ingress through the gap, and improving integral sound insulation of the door.

In some other embodiments, the glass guide groove 2 is a U-shaped structure, and two side ends of the glass guide groove 2 corresponding to the U-shaped structure are bent in a same direction and form a misalignment opening, wherein the misalignment opening is opposite to the body of the U-shaped structure. A first sealing lip 51 and a second sealing lip 52 are fixedly connected to the two side ends of the glass guide groove 2 respectively. The first sealing lip 51 is in dynamic sealing connection to an inner wall surface of the door glass 3, and the second sealing lip 52 is in dynamic sealing connection to a side end of the door glass 3.

In some other embodiments, an end face of a notch in one side of the glass guide groove 2 is aligned with the door glass 3 and the door panel 13 on a same plane, and the door glass is flush with an outer surface of the door, such that wind resistance and wind noise are reduced.

In some other embodiments, the glass guide rail 4 includes a gluing groove portion 41 and a fork frame portion 42. The gluing groove portion 41 is secured to one side, close to the door guide rail 12, of the door glass 3. The fork frame portion 42 is secured to the door glass 3 via the gluing groove portion 41 and is positioned in the glass guide groove 2. The fork frame 42 is a Y-shaped structure. Two limiting protrusions 43 are respectively arranged at each of two side ends of the fork frame portion 42, and the four limiting protrusions 43 are in contact with a corresponding inner side wall of the glass guide groove 2 and are capable of limiting front-rear movement of the glass guide rail in an X direction and inner-outer shaking in a Y direction, such that the glass guide rail is more stable when the door glass is being lifted.

In some other embodiments, a third sealing lip 53 is fixedly connected to a bottom of the glass guide groove 2, wherein the third sealing lip 53 is in dynamic sealing connection to the fork frame portion 42; and a fourth sealing lip 54 is arranged on a bending portion, close to an end portion of the other side, of the glass guide groove 2, wherein the fourth sealing lip 54 is in dynamic sealing connection to the glass guide rail 4. The glass guide groove 2 and the first sealing lip 51, the second sealing lip 52, the third sealing lip 53 and the fourth sealing lip 54 on the glass guide groove cooperate to establish a sealing and isolative environment between the door glass 3 and the door 1. The plurality of sets of sealing lips help avoid the possibility that external air and rainwater enter the vehicle through the door, improve the sealing performance, and significantly reduce the noise.

In some other embodiments, a wear-resistant layer 6 corresponding to the limiting protrusion 43 is arranged on the inner side wall of the glass guide channel 2 such that the service life of the glass guide groove is prolonged, and the damage of long-term friction of the glass guide rail to the glass guide groove is reduced; a wear-resistant layer 6 corresponding to an abutment position of the door glass 3 is arranged on an outer side wall of each of the first sealing lip 51 and the second sealing lip 52, and a wear-resistant layer 6 corresponding to an abutment position of the glass guide rail 4 is arranged on an outer side wall of each of the third sealing lip 53 and the fourth sealing lip 54, such that the wear of the wear-resistant layers on the sealing lips is reduced.

In some other embodiments, a hanging hook 21 is arranged on the glass guide groove, wherein the hanging hook 21 is connected to end portions of a reinforcement plate 11 and an inner sheet metal 14.

The present disclosure also discloses a flush door system. The flush door system includes the mating structure for the flush vehicle lift system and a door body, wherein a door guide rail 12 configured to fix a glass guide groove and a reinforcement plate 11 configured to reinforce a structural strength of the door body are arranged on the door body, the door guide rail 12 is secured to and wrapped on an outer side of the glass guide groove 2 after being bent and molded by an alloy plate, the door guide rail 12 can be considered as a part of the door body, a door panel 13 is secured to the reinforcement plate 11, the door panel 13 is fixedly connected to one end of the glass guide groove 2, the ends of the door glass 3, the door panel 13 and the glass guide groove 2 are positioned on the same plane, and the inner side metal plate 14 is provided with the reinforcement plate 11 configured to improve the structural strength of the door body.

In some other embodiments, the door panel 13 is a glass panel, as shown in FIG. 1, the sealing lip 5 is molded from an EPDM material, has a specific strength and toughness and is adapted to seal the door glass, and the wear-resistant layer 6 is molded from a hard rubber or a PER material and has excellent wear resistance.

In some other embodiments, the door panel 13 is a plastic panel, as shown in FIG. 2. The plastic panel has advantages in terms of cost and ease of installation, but is not consistent in appearance with both glass and the door, which is a major drawback.

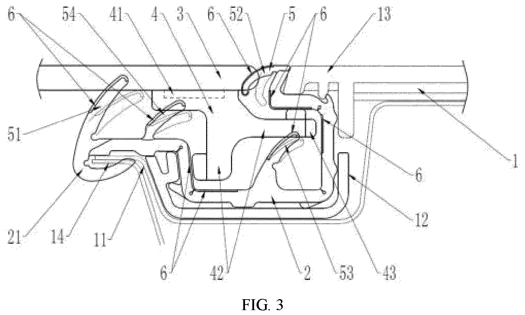

In some other embodiments, the door panel 13 is a cast aluminum panel, as shown in FIG. 3. The cast aluminum panel has the advantages of consistency and stability, but is a major disadvantage in terms of high processing man-hours and high scrap rate of cast aluminum; in addition to the different materials of the door panels, the structure of the door rail is different in FIGS. 1 to 3.

According to the door system, there is no step between the door glass 3 and the door body, smooth transition is achieved, wind resistance and wind noise are reduced, the airtightness between the door glass and the door body is good, air ingress and water ingress are avoided, and a better sound insulation effect is achieved.

For the device and the use method disclosed in the embodiments, since the device and the use method correspond to the method disclosed in the embodiments, the description is relatively simple, and the relevant places refer to the description of the method section.

The previous description of the disclosed embodiments is provided to enable any person skilled in the art to make or use the present disclosure. Various modifications to these embodiments will be readily apparent to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A mating structure for a flush vehicle lift system, applicable to being mounted on a door (1), the mating structure comprising:
a glass guide groove (2), wherein the glass guide groove (2) is a bent structure and is secured to the door (1) and a door guide rail (12);
door glass (3), wherein a glass guide rail (4) is secured to one side, close to the door guide rail (12), of the door glass (3), wherein the glass guide rail (4) is fitted and slidably connected in the glass guide groove (2), the glass guide groove (2) limits front-rear movement and inner-outer shaking of the glass guide rail (4), and the glass guide groove (2) is configured to guide the glass guide rail (4) and the door glass (3) to lift;
a door panel (13), wherein the door panel (13) is secured to an outer side wall of the door (1) and is coplanar with the door glass (3);
a plurality of sets of sealing lips (5), wherein the sealing lips (5) respectively correspond to a length direction of the glass guide groove (2), and the sealing lips (5) are integrally connected to the glass guide groove (2) and are in dynamic sealing connection to the door glass (3) and the glass guide rail (4).

2. The mating structure according to claim 1, wherein the glass guide groove (2) is a U-shaped structure, and two side ends of the glass guide groove (2) corresponding to the U-shaped structure are bent in a same direction and form a misalignment opening, wherein a first sealing lip (51) and a second sealing lip (52) are fixedly connected to the two side ends of the glass guide groove (2) respectively, wherein the first sealing lip (51) is in dynamic sealing connection to an inner wall surface of the door glass (3), and the second sealing lip (52) is in dynamic sealing connection to a side end of the door glass (3).

3. The mating structure according to claim 2, wherein an end face of a notch in one side of the glass guide groove (2) is aligned with the door glass (3) and the door panel (13) on a same plane.

4. The mating structure according to claim 2, wherein the glass guide rail (4) comprises a gluing groove portion (41) and a fork frame portion (42), wherein the gluing groove portion (41) is secured to one side, close to the door guide rail (12), of the door glass (3) by an adhesive, and the fork frame portion (42) is positioned in the glass guide groove (2), the fork frame portion (42) is a Y-shaped structure, wherein two limiting protrusions (43) are respectively arranged at each of two side ends of the fork frame portion (42), and are in contact with an inner side wall of the glass guide groove (2) and are configured to limit front-rear movement of the glass guide rail (4) in an X direction and inner-outer shaking in a Y direction.

5. The mating structure according to claim 4, wherein a third sealing lip (53) is fixedly connected to a bottom of the glass guide groove (2), wherein the third sealing lip (53) is in dynamic sealing connection to the fork frame portion (42); and a fourth sealing lip (54) is arranged on a bending portion, close to an end portion of the other side, of the glass guide groove (2), wherein the fourth sealing lip (54) is in dynamic sealing connection to the glass guide rail (4), and the glass guide groove (2) and the first sealing lip (51), the second sealing lip (52), the third sealing lip (53) and the fourth sealing lip (54) on the glass guide groove cooperate to establish a sealing and isolative environment between the door glass (3) and the door (1).

6. The mating structure according to claim 5, wherein a wear-resistant layer (6) corresponding to the limiting protrusion (43) is arranged on the inner side wall of the glass guide groove (2), a wear-resistant layer (6) corresponding to an abutment position of the door glass (3) is arranged on an outer side wall of each of the first sealing lip (51) and the second sealing lip (52), and a wear-resistant layer (6) corresponding to an abutment position of the glass guide rail (4) is arranged on an outer side wall of each of the third sealing lip (53) and the fourth sealing lip (54).

7. A flush door system, comprising: the mating structure for the flush vehicle lift system as defined in any one of claims 1 to 6, and a door body, wherein a door guide rail (12) configured to fix a glass guide groove and a reinforcement plate (11) configured to reinforce a structural strength of the door body are arranged on the door body, the door guide rail (12) is secured to and wrapped on an outer side of the glass guide groove (2) after being bent and molded by an alloy plate, a door panel (13) is secured to the reinforcement plate (11), the door panel (13) is fixedly connected to one end of the glass guide groove (2), and ends of the door glass (3), the door decorative plate (13) and a second sealing lip (52) are positioned on a same plane.

8. The flush door system according to claim 7, wherein the door panel (13) is any one of a glass panel, a plastic panel, and a cast aluminum trim, the sealing lip (5) is molded from an EPDM material, and the wear-resistant layer (6) is molded from a hard rubber or a PER material.
